# EUROPÄISCHE PATENTSCHRIFT

(11) **EP 2 946 972 B1**
(45) Veröffentlichungstag und Bekanntmachung des Hinweises auf die Patenterteilung: **10.07.2019**
(21) Anmeldenummer: 15168608.6
(22) Anmeldetag: 21.05.2015
(51) Int. Cl.: B60P 3/14, B60P 7/15, B60P 7/08

(54) **BEFESTIGUNGSSYSTEM FÜR INNENEINRICHTUNGSELEMENTE VON NUTZFAHRZEUGEN**
FASTENING SYSTEM FOR INTERNAL DEVICE ELEMENTS OF COMMERCIAL VEHICLES
SYSTEME DE FIXATION POUR DES ELEMENTS D'AMENAGEMENT INTERIEUR DE VEHICULE UTILITAIRE

(30) Priorität: 24.05.2014 DE 202014004275 U
(43) Veröffentlichungstag der Anmeldung: 25.11.2015
(73) Patentinhaber: Blomberger Holzindustrie GmbH, 32825 Blomberg (DE)
(72) Erfinder: Krampe, Bernd Peter, 45731 Waltrop (DE)
(74) Vertreter: Brandt, Detlef

(56) Entgegenhaltungen:
- EP-A1- 1 894 773
- DE-A1-102011 100 465
- DE-A1-102012 108 687
- DE-A1-102013 108 807
- DE-U1- 20 305 485

## Beschreibung

### Technisches Umfeld

Die Erfindung betrifft ein Befestigungssystem für Inneneinrichtungselemente von Nutzfahrzeugen wie Verkleidungsplatten und Einbauschränken, die im Rahmen des Einsatzes derartiger Fahrzeuge ein individuelle Anpassung an geforderte Verwendungszwecke ermöglichen.

### Stand der Technik

Nutzfahrzeuge werden üblicherweise nach dem Kauf beim Fahrzeughersteller mit unterschiedlichen Einbauten versehen, damit sie individuell verschiedensten Einsatzzwecken in industriellen Sektor oder bei Institutionen der öffentlichen Hand angepasst werden können. Beispielhaft seien hier Einbauschränke genannt, wie sie für Werkstattfahrzeuge üblich sind. Polizei- und Feuerwerkfahrzeuge werden ebenfalls mit angepassten Inneneinrichtungen versehen.

Diese Inneneinrichtungen können Seitenverkleidungen mit integrierten Montage- und Aufhängemöglichkeiten sein, die mit speziellen Ladungssicherungseinrichtungen ausgestattet sind und ergänzend Zusatzbauelemente zur Schonung von Ladung während des Transportes enthalten. Darüber hinaus werden in derartige Nutzfahrzeuge Einbauschränke eingesetzt, die jeweils optimal den Abmaßen des Innenraums entsprechender Nutzfahrzeuge unterschiedlicher Hersteller angepasst sind.

Im Stand der Technik sind dabei individuelle Befestigungsmöglichkeiten bekannt, die jeweils auf einen Hersteller derartiger Inneneinrichtungen zugeschnitten sind. Da jeder der zahlreichen Inneneinrichtungshersteller ein individuelles Ausbauprogramm für Nutzungsfahrzeuge am Markt zur Verfügung stellt, existieren eine Vielzahl von Befestigungsbauteilen einzelner Hersteller und zusätzlich in Abhängigkeit der jeweiligen Nutzfahrzeuge.

Beispiele des Stands der Technik sind in der Dokumente DE 10 2012 106 687 A1 und EP 1 894 773 A1 offenbart.

### Aufgabe der Erfindung

Aufgabe der vorliegenden Erfindung ist es daher, ausgehend von den unterschiedlichen Schrankelementen bzw. sonstigen Einbaukomponenten für die Ausstattung von Nutzfahrzeugen ein Befestigungssystem für Inneneinrichtungselemente von Nutzfahrzeugen bereitzustellen, welches für die angebotenen Bauelemente aller maßgeblichen am Markt etablierten Hersteller derartiger Inneneinrichtungen eine individuell anpassbare Möglichkeit der Integrierung in bestehende Nutzfahrzeuginnenräume bietet und darüberhinaus, mit wenigen universellen Befestigungsteilen auskommt. Es soll sowohl die Lagerhaltung bei den Anbietern, die Montagezeit und somit die Kosten für den Innenausbau herabgesetzt als auch die individuellen Möglichkeiten des Innenausbaus durch die Kombination von Bauelementen unterschiedlicher Hersteller gesteigert werden.

### Lösung der Aufgabe

Die gestellte Aufgabe wird für ein Befestigungssystem der eingangs geschilderten Art dadurch gelöst, dass dieses mindestens ein am Laderaumaufbau des Nutzfahrzeuges festlegbares Metallstrangpressprofil aufweist, welches einen im wesentlichen rechteckförmigen Querschnitt aufweist und mit einer Mehrzahl von an seinen Seitenflächen angeordneten, hinterschnittenen, in Profillängsrichtung verlaufenden Nuten versehen ist, in denen Tragverbinder für eine Adapterplatte mittels Nutsteinen einsatzbar sind, wobei die Tragverbinder aus zwei an ihren dem Metallstrangpressprofil abgewandten vorderen Ende in einem Drehgelenk miteinander verbundenen Tragarmen bestehen und im Drehgelenk mit einer Befestigungslasche der Adapterplatte verbunden sind, die mehrere Durchbrechungen zur Verschraubung mit den Einrichtungslementen aufweist.

Durch die geschilderte Konstruktion kann die zur Befestigung von Schränken oder Wandverkleidungen direkt dienende Adapterplatte in Bezug auf die Innenwand des Laderaumaufbaus des Nutzfahrzeuges mittels des Tragverbinders individuell beabstandet festgelegt werden, so dass beispielsweise Einbauschränke unterschiedlicher Tiefe so verbaut werden können, dass sich eine einheitliche Einbauschrankfront ergibt. Die Tragverbinder können dabei durch Verschieben innerhalb der Nuten des Metallstrangpressprofils den örtlichen Gegebenheiten für die Festlegung der Schrankaufbauten angepasst werden.

Es ergibt sich somit durch nur drei Bauteile erstmals die Möglichkeit, Bauelemente aller renommierten Innenausbauhersteller von Nutzfahrzeugen allen Innenraumgegebenheiten unterschiedlicher Fahrzeugproduzenten anzupassen. Die verwendeten drei Bauelemente sind dabei konstruktiv einfach gestaltet und somit kostengünstig herstellbar. Darüber hinaus lassen sie sich mit einfacher Verschraubungstechnik allen Einbaugegebenheiten anpassen, so dass sich der Montageaufwand beim Innenausbau von Nutzfahrzeugen signifikant verkleinert, da keine individuellen Bohrungen, Gewinde oder dergleichen zur Festlegung von Schrankaufbauten und Verkleidungen mehr nachträglich in das Fahrzeug eingebracht werden müssen.

Darüber hinaus besteht durch das neuartige Befestigungssystem die Gewähr, dass Sicherheitsanforderungen in Bezug auf die Festigkeit der Arretierungen für die einzubauenden Bauteile jederzeit gewährleistet werden können, da nachträgliche individuelle Befestigungspunkte, deren Kraftübertragungs- und -einleitungsmöglichkeiten unklar sind, vermieden werden.

Besondere Ausgestaltungen des erfindungsgemäßen Befestigungssystems ergeben sich in Zusammenschau mit der technischen Lehre des Hauptanspruches zusätzlich aus den auf den Hauptanspruch rückbezogenen Merkmalen der Unteransprüche.

Es hat sich insbesondere als vorteilhaft erwiesen, dass in die an Vorderseite des Metallstrangpressprofils vorhandenen Nuten, die der Laderaumwandung abgewandt sind, Scheuerleisten einsetzbar sind. Diese Scheuerleisten können in die Nuten eingeschoben werden, so dass eine andersartige Befestigung mittels Schrauben entfallen kann. Die Scheuerleisten dienen insbesondere bei sperrigen Transportgütern wie Möbeln dazu, Bewegungen des Transportgutes aufzufangen und Beschädigungen an den Innenraumverkleidungen des Nutzfahrzeuges zu vermeiden.

Es hat sich darüber hinaus als vorteilhaft erwiesen, die zum Befestigungssystem gehörende Adapterplatte als Winkelelement mit zwei parallel beabstandet zueinander angeordneten plattenförmigen Befestigungslaschen und einer zwischen den Befestigungslaschen rechtwinklig zur Adapterplattenebene angeordnete Halteplatte auszugestalten. Ein derartiger konstruktiver Aufbau hat erfahrungsgemäß gezeigt, dass mit derartigen Adapterplatten alle relevanten Einbauten und Gestaltungen des Nutzfahrzeuginnenraumes vorgenommen werden können. Die Halteplatten sind dabei entsprechend einer zweckmäßigen Gestaltung mit Durchbrüchen unterschiedlicher Durchmesser und Abstände versehen, so dass Verschraubungen von Einbauelementen unterschiedlicher Hersteller problemlos vorgenommen werden können. Natürlich ist bei den Durchbrüchen auch eine Langlochausbildung denkbar.

Darüber hinaus hat es sich als zweckmäßig erwiesen, im Bereich der dem Laderaumaufbau zugewandten Rückseite des Metallstrangpressprofils an den einander gegenüberliegenden Seitenflächen Nuten zur Aufnahme von Verkleidungselementen anzuordnen. In diese Nuten können beispielsweise Lochblechplatten eingesetzt werden, die in Ergänzung von Einbauschränken an den Stellen dem Schutz des Laderaums dienen, an denen keine sonstigen Einbauelemente gewünscht sind.

Selbstverständlich ist es auch möglich, insbesondere bei Fahrzeugen für den Transport sperriger Gegenstände an dem Strangpressprofil sogenannte Heavy-Duty-Verkleidungen anzubringen, die aus hochfesten, in der Regel aus Holz, hergestellten Verkleidungsplatten bestehen, die die empfindliche Blechhaut des Nutzfahrzeuges bei Verlagerungen der Transportgüter infolge von Bremsmanövern oder dergleichen schützen.

### Figurenbeschreibung

Im Folgenden wird ein Ausführungsbeispiel des Gegenstandes der Erfindung anhand mehrerer Zeichnung näher erläutert, aus denen die individuellen Anpassungen an unterschiedliche Raumerfordernisse deutlich werden. Es zeigt:
- Figur 1: eine Teilschnittdarstellung von oben auf das erfindungsgemäße Befestigungssystem, angebaut an der Ladebordwand eines Nutzfahrzeuges und
- Figur 2A, Figur 2B: eine Seitenansicht des Befestigungssystems aus Figur 1 entsprechend dem Pfeil A in zwei unterschiedlichen Einstellungspositionen

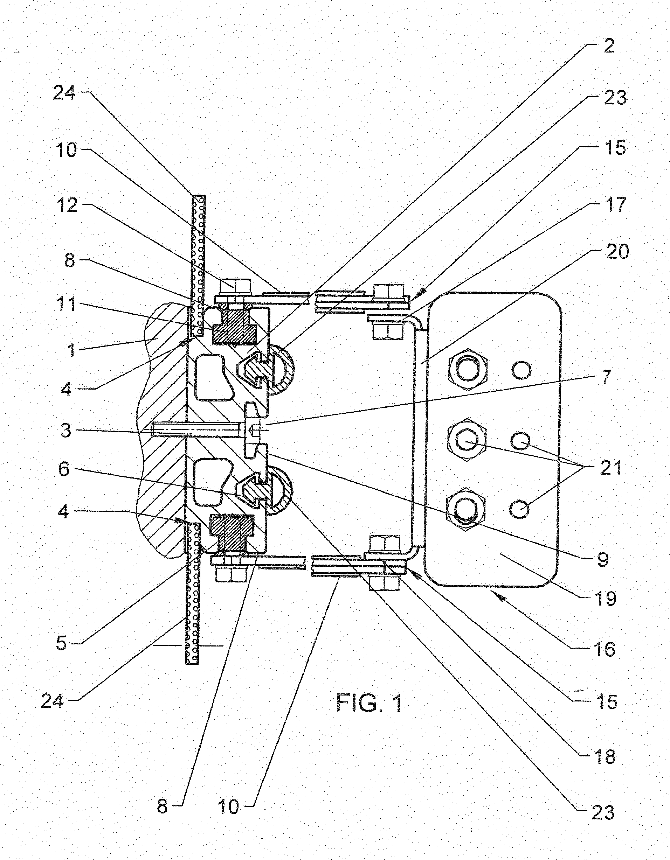

Aus der Darstellung der Figur 1 ist ersichtlich, dass das Befestigungssystem prinzipiell aus drei Bauelementen besteht. An einer mit 1 bezeichneten Laderaumaufbau eines Nutzfahrzeuges ist als erstes Bauelement ein Metallstrangpressprofil 2 mittels einer Mehrzahl von Schraubbefestigungen 3 festgelegt. Die Längserstreckung des Metallstrangpressprofils 2 liegt im dargestellten Ausführungsbeispiel in der Waagerechten, selbstverständlich sind jedoch auch andere winklige oder senkrechte Anordnungen denkbar.

Das Metallstrangpressprofil 2 besitzt einen im wesentlichen rechteckförmigen Querschnitt. An den Seitenflächen des Metallstrangpressprofils 2 ist dieses mit einer Mehrzahl von Nuten 4, 5, 6 und 7 versehen, die ihrem Einsatzzweck entsprechend ausgebildet sind. Die Nuten 4 sind dabei schlitzförmig ausgebildet, wobei die Nuten 5 in den Seitenflächen 8 sowie die Nuten 6 und 7 an der Frontfläche 9 des Metallstrangpressprofils hinterschnitten ausgeführt sind.

Die hinterschnittenen Nuten 5 sind dazu vorgesehen, zur Befestigung von Tragarmverbindern 10 zu dienen. Zu diesem Zweck werden in die Nuten 5 sogenannte Nutensteine 11 eingesetzt, die in Längsrichtung der Nuten 5 verschiebbar sind und mittels Schrauben 12 an einer gewünschten Position festgelegt werden.

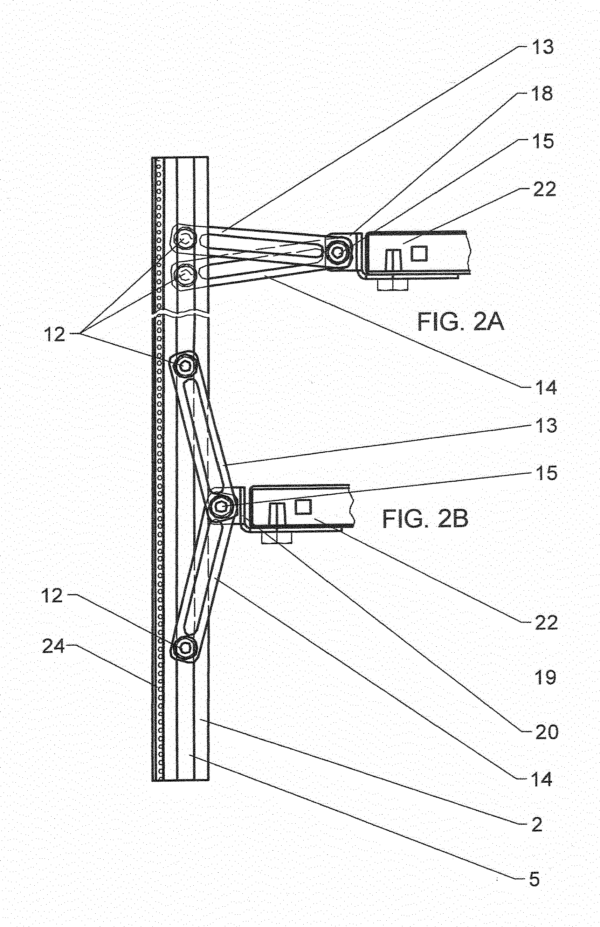

Aus der Darstellung der Figuren 2A und 2B wird deutlich, dass die Tragarmverbinder 10 jeweils aus zwei Tragarmen 13 und 14 bestehen. Die Tragarme 13 und 14 sind an ihrem vorderen, dem Metallstrangpressprofil 2 abgewandten freien Ende in einem Drehgelenk 15 miteinander verbunden. Die Drehgelenke 15 sind als Schraubverbindungen ausgeführt und dienen gleichzeitig zur Befestigung einer insgesamt mit 16 bezeichneten Adapterplatte. Wie aus den Abbildungen ersichtlich ist, besteht die Adapterplatte 16 aus zwei Befestigungslaschen 17, 18, mit denen die Adapterplatte 16 in den Drehgelenken 15 festgelegt ist. Die Befestigungslaschen 17 und 18 sind dabei parallel zur Seitenfläche 8 des Metallstrangpressprofils 2 angeordnet. Es ist jedoch auch denkbar, eine Winkellage der Befestigungslaschen zu den Seitenflächen 8 zu realisieren, sofern die Tragarme 13 und 14 mit einer entsprechenden Biegung versehen werden.

An der Vorderseite der Befestigungslaschen 17 und 18 ist rechtwinklig zu diesen eine Halteplatte 19 angeordnet, die über einen Verbindungssteg 20 mit den Befestigungslaschen 17 und 18 verbunden ist. Die Halteplatte 19 ist mit einer Mehrzahl von Durchbrechungen 21 im vorliegenden Fall als Durchgangsbohrungen ausgestattet, die in ihrem Durchmesser sowie in ihrem Lochabstand unterschiedlich sind. Die Durchbrechungen 21 können gegebenenfalls mit Einnietmuttern versehen werden, so dass eine unmittelbare Verschraubung mit Inneneinrichtungselementen 22 vorgenommen werden kann. Inneneinrichtungselemente 22 können Verstrebungen, Einbauschränke, Verkleidungsplatten oder dergleichen sein, die von unterschiedlichen Herstellern angeboten werden. Aufgrund des vielfältigen Angebotes wurde in den Figuren 2A und 2B ein derartiges Inneneinrichtungselement 22 nur schematisch und unvollständig dargestellt.

Aus der Darstellung der Figuren 2A und 2B wird neben dem Gesamtaufbau des erfindungsgemäßen Befestigungssystems deutlich, dass durch die Verstellbarkeit der Tragarmverbinder 10 eine Verlagerung des Drehgelenkes 15 und somit der Adapterplatte 16 in Bezug auf die Vorderkante des Metallstrangpressprofils 2 und der Wandung des Nutzfahrzeuges vorgenommen werden kann. Diese Abstandsänderung kann je nach Länge der Tragarmverbinder 10 im Bereich von 5 bis 80 mm oder mehr liegen. Auf diese Weise lassen sich insbesondere beim Einbau von Schrankelementen in den Innenraum von Nutzfahrzeugen unterschiedliche Schranktiefen ausgleichen.

Die unterschiedlichen Schranktiefen sind vorrangig dadurch bedingt, dass die Laderäume von Nutzfahrzeugen im unteren, dem Laderaumboden zugewandten Bereich eine größere Breite aufweisen als im Dachbereich. Dies ist aus Stabilitätsgründen notwendig und macht die unterschiedliche Tiefenerstreckung von Schränken erforderlich, damit eine einheitliche Frontgestaltung der Einbauten gewährleistet ist.

Die Tragarmverbinder 10 sowie die Adapterplatte 16 werden entsprechend einer vorteilhaften Gestaltung vorzugsweise als Stahl- oder Edelstahlbauteile ausgebildet, wohingegen das Metallstrangpressprofil aus fertigungstechnischen als auch aus wirtschaftlichen Gründen aus Aluminium gezogen wird.

Die an der Frontfläche 9 vorhandenen Nuten 6 und 7 können für unterschiedliche Zwecke genutzt werden. Zum einen ist aus der Figur 1 ersichtlich, dass in die Nuten 6 sogenannte Scheuerleisten 23 eingeschoben werden können. Der Querschnitt der Scheuerleisten 23 ist dabei der Hinterschneidung der Nuten 6 angepasst, so dass eine Einklipsverbindung zwischen Metallstrangpressprofil 2 und Scheuerleiste 23 herbeigeführt werden kann.

Alternativ können in den Nuten 6 auch sogenannte Heavy-Duty-Verkleidungen befestigt werden. Derartige Verkleidungen bestehen aus hochfesten plattenförmigen Verkleidungselementen, vorzugsweise aus Holz, die mittels geeigneter Verbindungsmittel, die in die Nuten 6 eingesetzt werden, an dem Metallstrangpressprofil 2 festlegbar sind.

Die Nut 7 dient zum einen vorrangig zur Aufnahme von Airlinefittings und darüber hinaus der Zugänglichkeit der Schraubverbindung 3 zur Befestigung des Metallstrangpressprofils 2 an der Innenwandung eines Nutzfahrzeuges. Darüber hinaus ist jedoch denkbar, dass aufgrund der Hinterschneidung der Nut 7 auch in diese entsprechende Nutsteine einsetzbar sind, mithilfe derer zusätzliche Bauelemente im Inneren des Nutzfahrzeuges festgelegt werden können. Aus der Darstellung der Figur 1 wird ergänzend deutlich, dass vor der Ladebordwand 1 des Nutzfahrzeuges mittels der Metallstrangpressprofile 2 und der darin angeordneten Nuten 4 beispielsweise entsprechende Verkleidungsplatten 24 vorgebaut werden können.

Somit wird durch den Gegenstand der Erfindung ein Befestigungssystem für Inneneinrichtungselemente von Nutzfahrzeugen geschaffen, welches durch nur drei Bauteile den universellen Einbau unterschiedlichster Gegenstände wie Einbauschränke, Verkleidungen oder dergleichen in Nutzfahrzeuge unterschiedlicher Hersteller ermöglicht. Notwendig ist lediglich der Anbau der Metallstrangpressprofile 2 an der Innenwandung des Nutzfahrzeuges. Der Anbau kann gegebenenfalls in Absprache mit den verschiedenen Nutzfahrzeugherstellern durch die Bereitstellung serienmäßiger Anschraubpunkte erfolgen, die aufgrund der produktionstechnischen Gegebenheiten im Nutzfahrzeugherstellerwerk entsprechend hohe Kräfte in den Kraftfahrzeugaufbau einleiten können.

Selbstverständlich ist das erfindungsgemäße Befestigungssystem nicht auf die Ausführungsform der Figuren 1 sowie 2A und 2B beschränkt. Vielmehr sind natürlich auch andere Hinterschneidungen der Nuten 5, 6 und 7 sowie der Anordnung der Halteplatte 19 zu den Befestigungslaschen 17 und 18 der Adapterplatte denkbar. Darüber hinaus können die Tragarme 13 und 14 der Tragarmverbinder 10 selbstverständlich mit Kröpfungen, Abwinklungen oder dergleichen versehen werden, um individuelle Anpassungen vorzunehmen. Derartige Anpassungen können gegebenenfalls nach einer industriellen Herstellung der Tragarmverbinder 10 sowie der Adapterplatte 16 auch noch vor Ort bei der Montage vorgenommen werden und widersprechen nicht dem Kern der Erfindung, der darin besteht, ein universelles Befestigungssystem zu schaffen.

### Bezugszeichenliste:

- 1.: Laderaumaufbau
- 2.: Metallstrangpressprofil
- 3.: Schraubverbindung
- 4.: Nut
- 5.: Nut
- 6.: Nut
- 7.: Nut
- 8.: Seitenfläche
- 9.: Frontfläche
- 10.: Tragarmverbinder
- 11.: Nutsteine
- 12.: Schraube
- 13.: Tragarm
- 14.: Tragarm
- 15.: Drehgelenk
- 16.: Adapterplatte
- 17.: Befestigungslasche
- 18.: Befestigungslasche
- 19.: Halteplatte
- 20.: Verbindungslasche
- 21.: Durchbrechung
- 22.: Inneneinrichtungselement
- 23.: Scheuerleiste
- 24.: Verkleidungsplatte

## Patentansprüche

1. Befestigungssystem für Inneneinrichtungselemente (22) von Nutzfahrzeugen mit mindestens einem am Laderaumaufbau (1) des Nutzfahrzeuges festlegbaren Metallstrangpressprofil (2), welches einen im wesentlichen rechteckförmigen Querschnitt aufweist und mit einer Mehrzahl von an seinen Seitenflächen (8, 9) angeordneten hinterschnittenen in Profillängsrichtung verlaufenden Nuten (4, 5, 6, 7) versehen ist, in denen Tragarmverbinder (10) für die Befestigung einer Adapterplatte (16) mittels Nutsteinen (11) einsetzbar sind, wobei die Tragarmverbinder (10) aus mindestens zwei an ihrem vorderen, dem Metallstrangpressprofil (2) abgewandten Ende in einem Drehgelenk (15) miteinander verbunden Tragarmen (13, 14) bestehen und im Drehgelenk (15) mit einer Befestigungslasche (17, 18) der Adapterplatte (16) verbunden sind, die mehrere Durchbrechungen (21) zur Verschraubung mit den Inneneinrichtungselementen (23) aufweist.

2. Befestigungssystem nach Anspruch 1,
**dadurch gekennzeichnet, dass**
das in die Nuten (6), die an der dem Laderaumaufbau (1) abgewandten Vorderseite des Metallstrangpressprofils (2) angeordnet sind, Scheuerleisten (22) einsetzbar sind.

3. Befestigungssystem nach einem der Ansprüche 1 oder 2,
**dadurch gekennzeichnet, dass**
die Adapterplatte (16) als Winkelelement mit zwei parallel beabstandet zueinander angeordneten plattenförmigen Befestigungslaschen (17, 18) und einer zwischen den Befestigungslaschen (17, 18) rechtwinklig zur Adapterplattenebene angeordneten Halteplatte (19) ausgebildet ist.

4. Befestigungssystem nach Anspruch 4,
**dadurch gekennzeichnet, dass**
die Halteplatte (19) mit Durchbrechungen (21) von unterschiedlichem Durchmesser und in unterschiedlichem Abstand versehen ist.

5. Befestigungssystem nach einem der Ansprüche 1 bis 4,
**dadurch gekennzeichnet, dass**
im Bereich der dem Laderaumaufbau (1) zugewandten Rückseite des Metallstrangpressprofils (2) an dessen einander gegenüberliegenden Seitenflächen (8, 9) Nuten (4) zur Aufnahme von Verkleidungsplatten (24) angeordnet sind.

## Claims

1. Fastening system for interior fixture elements (22) of commercial vehicles having at least one extruded metal profile (2) which can be attached to the cargo space superstructure (1) of the commercial vehicle, which has a substantially rectangular cross-section and is provided with a plurality of undercut grooves (4, 5, 6, 7) in its side faces (8, 9) extending in the profile longitudinal direction in which supporting arm connectors (10) can be inserted in order to secure an adapter plate (16) by means of slot nuts (11), and the supporting arm connectors (10) comprise at least two supporting arms (13, 14) connected to one another at their front end remote from the extruded metal profile (2) in a pivot joint (15) and in the pivot joint (15) are connected to a mounting lug (17, 18) of the adapter plate (16) which has a plurality of orifices (21) to provide a screw connection to the interior fixture elements (23).

2. Fastening system as claimed in claim 1,
**characterised in that**
protecting ribs (22) can be inserted in the grooves (6) disposed on the front face cf the extruded metal profile (2) remote from the cargo space superstructure (1).

3. Fastening system as claimed in one of claims 1 or 2,
**characterised in that**
the adapter plate (16) is provided in the form of an angled element having two plate-shaped mounting lugs (17, 18) disposed in parallel spaced apart from one another and a retaining plate (19) disposed at a right angle to the adapter plate plane between the mounting lugs (17, 18).

4. Fastening system as claimed in claim 4,
**characterised in that**
the retaining plate (19) is provided with orifices (21) of differing diameter and with differing spacing.

5. Fastening system as claimed in one of claims 1 to 4,
**characterised in that**
in the region of the rear face of the extruded metal profile (2) facing the cargo space superstructure (1), grooves (4) are disposed on the mutually opposite side faces (8, 9) thereof for receiving facing panels (24).

## Revendications

1. Système de fixation pour des éléments d'aménagement intérieur (22) de véhicules utilitaires, comprenant au moins un profilé extrudé métallique (2) pouvant être fixé à la structure de l'espace de chargement (1) du véhicule utilitaire, lequel profilé présente une section transversale sensiblement rectangulaire et est pourvu d'une pluralité de rainures (4, 5, 6, 7) contre-dépouillées, s'étendant dans la direction longitudinale du profilé et ménagées sur les surfaces latérales (8, 9) dudit profilé, rainures dans lesquelles peuvent être insérés des raccords à bras porteurs (10) pour la fixation d'une plaque adaptatrice (16) au moyen de clavettes rainurées (11), dans lequel les raccords à bras porteurs (10) sont constitués d'au moins deux bras porteurs (13, 14) reliés l'un à l'autre dans une articulation tournante (15) par leur extrémité avant opposée au profilé extrudé métallique (2) et sont reliés dans l'articulation tournante (15) à une languette de fixation (17, 18) de la plaque adaptatrice (16), qui présente plusieurs ouvertures (21) pour le vissage aux éléments d'aménagement intérieur (23).

2. Système de fixation selon la revendication 1,
**caractérisé**
**en ce que** des bandes de frottement (22) peuvent être insérées dans les rainures (6) qui sont ménagées sur la face avant du profilé extrudé métallique (2) opposée à la structure d'espace de chargement (1).

3. Système de fixation selon l'une quelconque des revendications 1 ou 2,
**caractérisé**
**en ce que** la plaque adaptatrice (16) est réalisée sous la forme d'un élément angulaire pourvu de deux languettes de fixation (17, 18) en forme de plaque agencées parallèlement à distance l'une de l'autre et d'une plaque de retenue (19) agencée perpendiculairement au plan de la plaque adaptatrice entre les languettes de fixation (17, 18).

4. Système de fixation selon la revendication 4,
**caractérisé**
**en ce que** la plaque de retenue (19) est pourvue d'ouvertures (21) de différents diamètres et ménagées selon différents intervalles.

5. Système de fixation selon l'une quelconque des revendications 1 à 4,
**caractérisé**
**en ce que** des rainures (4) destinées à loger des panneaux d'habillage (24) sont ménagées dans la zone de la face arrière du profilé extrudé métallique (2) tournée vers la structure d'espace de chargement (1), sur les surfaces latérales (8, 9) opposées les unes aux autres dudit profilé.
